# EUROPÄISCHE PATENTSCHRIFT

(11) **EP 0 525 405 B1**
(45) Veröffentlichungstag und Bekanntmachung des Hinweises auf die Patenterteilung: **26.10.1994**
(21) Anmeldenummer: 92110942.7
(22) Anmeldetag: 29.06.1992
(51) Int. Cl.: B23Q 1/08

(54) **Werkstückspindel einer Drehmaschine**
Workpiece spindle of a lathe
Broche pour pièces de travail d'un tour

(30) Priorität: 08.07.1991 DE 4122545
(43) Veröffentlichungstag der Anmeldung: 03.02.1993
(73) Patentinhaber: GILDEMEISTER AG, D-33689 Bielefeld (DE)
(72) Erfinder: Schalles, Erhard, W-4800 Bielefeld 18 (DE)

(56) Entgegenhaltungen:
- DE-C- 2 724 440
- FR-A- 2 147 763
- US-A- 3 060 335

## Beschreibung

Die Erfindung betrifft einen Spindelkasten für eine Drehmaschine mit einer Werkstückspindel, die mit einem vorderen und hinteren Spindellager im Spindelkasten gelagert ist und einen Spindelflansch zur Befestigung eines Spannfutter aufweist, wobei der Rotor eines Antriebmotors zwischen dem vorderen und hinteren Spindellager auf der Werkstückspindel befestigt ist.

Eine derartige Werkstückspindel ist in DE-PS 27 24 440 dargestellt und mit einer Kühleinrichtung für die Werkstückspindel ausgestattet. Die Werkstückspindel ist einstückig ausgeführt und mit einem Spannfutter versehen. Über die Befestigung der Ankerwicklung auf der Spindel ist nichts ausgesagt.

Eine detaillierte Darstellung eines Hauptspindelantriebs ist dem Prospekt D 71 608/05.91 der Fa. Indramat GmbH mit dem Titel "1MB-Digitale intelligente AC-Hauptantriebe mit Bausatzspindelmotoren" zu entnehmen. Dort ist auf den Seiten 2 und 3 eine in einem Spindelkasten gelagerte Werkstückspindel gezeigt, auf der der Rotor eines Antriebsmotors mit einem Druckölpreßverband befestigt ist. Der Druckölpreßverband ist erforderlich, damit die Werkstückspindel im Spindelkasten montiert bzw. gegebenenfalls ausgebaut werden kann.

Der Druckölpreßverband oder auch ein anders geartetes Verbindungsmittel für die Befestigung des Rotors auf der Spindel verringert den Innendurchmesser des Rotors und verkleinert damit bei gegebenem Außenumfang die Motorleistung oder geht zu Lasten des Spindeldurchmessers und verringert damit die Steifigkeit der Spindel oder den Durchlaß einer Spindelbohrung.

Bei den üblichen, hohen Drehzahlen für Werkstückspindeln von Drehmaschinen muß der Rotor eine Endbearbeitung im montierten Zustand erhalten. Auch die Lagersitze müssen eventuell zum Schluß nochmals feinbearbeitet werden. Unwuchten des Spindel-Rotorsystems müssen beseitigt werden, was nur möglich ist, bevor die Werkstückspindel im Spindelkasten montiert ist. Selbst bei Verwendung so aufwendiger Verbindungsmittel wie sie Druckölpreßverbände darstellen, werden die Bemühungen um Genauigkeit teilweise wieder dadurch zunichte gemacht, daß es nicht gelingt, bei der erneuten Montage des Rotors die bei Abgleich gegebene Zuordnung von Werkstückspindel und Rotor exakt wieder zu erreichen.

Der Erfindung liegt die Aufgabe zugrunde, die genannten Nachteile zu vermeiden. Insbesondere soll die Werkstückspindel in den Spindelkasten einbaubar sein, ohne daß der Rotor des Antriebsmotors von der Werkstückspindel entfernt werden muß.

Die Aufgabe wird durch die Merkmale des Hauptanspruchs gelöst.

Der Rotor braucht für Montagezwecke nicht von der Werkstück spindel entfernt zu werden, da die Spindellager sich von beiden Spindelenden her montieren lassen. Die Trennung des Spindelflansches von der Werkstückspindel hat darüberhinaus den Vorteil, daß die Anpassung an unterschiedliche Spannfutter ohne zusätzliche Bauteile erfolgen kann. Auch braucht bei einem wärmebehandelden Werkstückspindelkopf nur noch der Spindelflansch einer Wärmebehandlung unterzogen zu werden.

Häufig werden bei unterschiedlichen Einsatzbedingungen für Werkstückspindeln z. B. Hochgeschwindigkeitszerspanung oder Schwerzerspanung auch unterschiedliche Lagergrößen und Lagerarten verwendet. Die beim Stand der Technik erforderliche Anpassung der Rotorbohrung an unterschiedliche Lagerinnendurchmesser entfällt bei der erfindungsgemäßen Lösung.

Die häufigste und einfachste Befestigung des Rotors von Antriebsmotoren auf Motorwellen geschieht durch Aufschrumpfen. Diese kostengünstige Befestigung ist bisher bei Werkstückspindeln nicht möglich gewesen, weil der Rotor dabei auf 200 Grad Celsius und mehr erwärmt werden muß und der Wärmeübergang auf die Spindel zu Qualitätminderungen der Lager und zu Einbußen bei der Lagerschmierung führen würde.

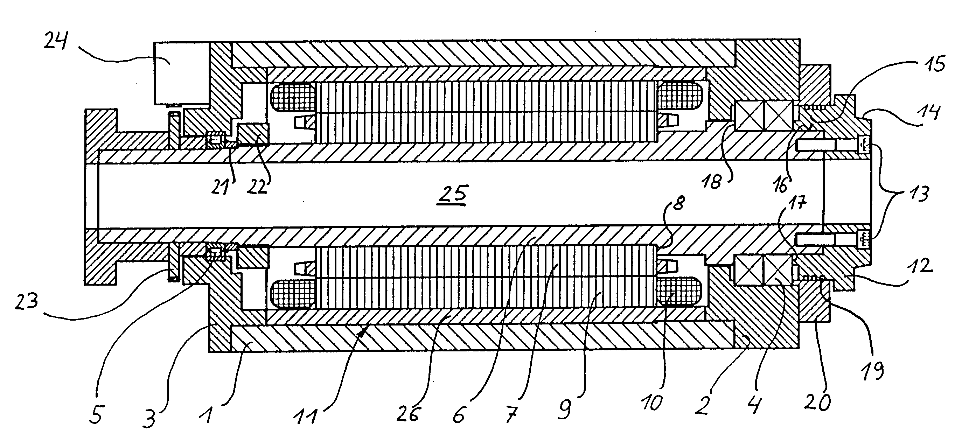

Die Erfindung wird an Hand der einzigen Zeichnung eines Spindelkastens einer Drehmaschine näher erläutert.

Ein radial ungeteilter Spindelkasten 1 wird durch Deckel 2, 3 verschlossen, die die Außenringe der Spindellager 4, 5 aufnehmen. Die Innenringe der Spindellager 4, 5 sind auf der Werkstückspindel 6 befestigt. Zwischen den Spindellagern 4, 5 ist der Rotor 7 mit der Werkstückspindel 6 undrehbar verbunden.

Das Blechpaket des Rotors 7 liegt dabei an einem Absatz 8 der Werkstückspindel 6 an. Der Rotor 7 ist vom Stator 9 und den Statorwicklungen 10 des Antriebsmotors 11 umgeben. Der Stator 9 wird von einem diesen umgebenden Kühlmantel 26 gekühlt.

Die Werkstückspindel 6 trägt an ihrem einen Ende einen Spindelflansch 12, der mit Paßschrauben 13 an der Werkstückspindel 6 befestigt ist. Der Spindelflansch 12 weist einen Spannfutter-Zentrieransatz 14 zur Aufnahme von Spannfuttern auf.

Werkstückspindelseitig ist der Spindelflansch 12 mit einem Zentrierring 15 einstückig ausgebildet, der mit der Werkstückspindelnase einen Paßsitz 16 bildet. Der Zentrierring 15 hat einen Ansatz 17, der am Innenring des vorderen Spindellagers 4 anliegt und diesen damit unverschieblich gegen den Absatz 18 der Werkstückspindel 6 festlegt.

Der Zentrierring 15 trägt am Außenumfang eine Labyrinthdichtung 19 zum Schutz des Spindellagers 4 und des Antriebsmotors 11 vor Kühlmittel und Verschmutzung. Die Labyrinthdichtung 19 ist von einer Hülse 20, die mit dem Deckel 2 verbunden ist, umgeben.

Die Lage des hinteren Spindellagers 5 wird auf der Werkstückspindel 6 durch einen Distanzring 21 und eine Spindelmutter 22 festgelegt, der gleichzeitig eine Meßscheibe 23 undrehbar mit der Werkstückspindel 6 verbindet. Die Meßscheibe 23 wird von einem Meßaufnehmer 24 abgetastet, der die Spindelpositionssignale an eine Drehmaschinensteuerung überträgt.

Die Bohrung 25 der Werkstückspindel 6 wird für eine Zugstange zur Bestätigung des Spannfutters bei einem Futterdrehautomaten oder für eine Werkstoffstange bei einem Stangendrehautomaten genutzt. Insbesondere für den zweiten Fall soll die Bohrung 25 so groß wie möglich gehalten werden, da in ihr auch noch Zugrohre untergebracht werden müssen.

Andererseits verschlechtert sich die Dynamik des Antriebsmotors mit wachsendem Hebelarm, der an der Rotation beteiligten Massen. Es ist daher besonders vorteilhaft, wenn der Einbauraum des Rotors nicht noch durch Spannhülsen vergrößert werden muß.

Bei der Montage, vorzugsweise in senkrechter Aufstellung, kann die mit dem Lagerinnenring des hinteren Spindellagers 5 und den Lagerollen, dem Rotor 7 und dem vorderen Spindellager 4 mit dem Deckel 2 vormontierte Spindel 6 in den Spindelkasten 1, der den Stator 9 enthält und durch den Deckel 3 mit dem Außenring des Spindellagers 5 verschlossen ist, mühelos eingeschoben werden. Es sind dann lediglich noch die Meßscheibe 23 und der Spindelflansch 12 auf die Werkstückspindel 6 aufzuschieben und zu befestigen. Die Demontage erfolgt in umgekehrter Reihenfolge, ohne daß der Rotor von der Werkstückspindel 6 gelöst werden muß.

## Patentansprüche

1. Spindelkasten (1) für eine Drehmaschine mit einer Werkstückspindel (6), die mit einem vorderen und hinteren Spindellager (4,5) im Spindelkasten (1) drehbar gelagert ist und einen Spindelflansch (12) zur Befestigung eines Spannfutters aufweist, wobei der Rotor (7) eines Antriebsmotors (11) zwischen dem vorderen und hinteren Spindellager (4,5) auf der Werkstückspindel (6) befestigt ist, dadurch gekennzeichnet, daß der Spindelflansch (12) lösbar mit der Werkstückspindel (6) verbunden ist und die Spindelaußendruchmesser der Werkstückspindel (6) auf den vom Antriebsmotor (11) abgewandten Seiten der Spindellager (4,5) nicht größer als die jeweiligen Lagerinnendurchmesser sind.

2. Spindelkasten für eine Drehmaschine nach Anspruch 1, dadurch gekennzeichnet, daß der Spindelflansch (12) den Innenring des Spindellagers (4) auf der Werkstückspindel (6) fixiert.

3. Spindelkasten für eine Drehmaschine nach Anspruch 1, dadurch gekennzeichnet, daß der Spindelflansch (12) einen gegen das Spindellager (4) gerichteten Ansatz (17) zur Lagerfixierung aufweist.

4. Spindelkasten für eine Drehmaschine nach Anspruch 1, dadurch gekennzeichnet, daß der Spindelflansch (12) die Dichtelemente (19) der Lagerabdichtung trägt.

5. Spindelkasten für eine Drehmaschine nach Anspruch 1, dadurch gekennzeichnet, daß der Rotor (7) unmittelbar auf der Werkstückspindel (6) befestigt ist.

6. Spindelkasten für eine Drehmaschine nach Anspruch 1, dadurch gekennzeichnet, daß der Rotor (7) unlösbar auf der Werkstückspindel (6) befestigt ist,

7. Spindelkasten für eine Drehmaschine nach Anspruch 1, dadurch gekennzeichnet, daß der Rotor (7) auf der Werkstückspindel (6) aufgeschrumpft ist.

8. Spindelkasten für eine Drehmaschine nach Anspruch 1, dadurch gekennzeichnet, daß verschiedene Spindelflansche (12) mit unterschiedlichem Spannfutterzentrieransatz (14) und/oder unterschiedlichen Befestigungsbohrungen für verschiedene Spannfutter gegeneinander austauschbar sind.

9. Spindelkasten für eine Drehmaschine nach Anspruch 1, dadurch gekennzeichnet, daß die Innenringe der Werkstückspindellager (4,5) an innenliegenden Absätzen (18) der Werkstückspindel (6) oder mit ihr einstellbar verbundenen Distanzringen (21) anliegen.

10. Spindelkasten für eine Drehmaschine nach Anspruch 1, dadurch gekennzeichnet, daß der Spindelflansch (12) eine Paßbohrung und die Werkstückspindel (6) im Fügebereich einen Zentriersitz aufweist.

## Claims

1. A headstock (1) for a lathe having a workpiece spindle (6) which is rotatably mounted in the headstock (1) by a front and a rear spindle bearing (4, 5) and has a spindle flange (12) for fixing a chuck, wherein the rotor (7) of a drive motor (11) is fixed between the front and rear spindle bearings (4, 5) on the workpiece spindle (6), characterised in that the spindle flange (12) is releasably connected to the workpiece spindle (6) and the outside diameters of the workpiece spindle (6) on the sides of the spindle bearings (4, 5), which are remote from the drive motor (11), are not greater than the respective bearing inside diameters.

2. A headstock for a lathe according to claim 1 characterised in that the spindle flange (12) fixes the inner race of the spindle bearing (4) on the workpiece spindle (6).

3. A headstock for a lathe according to claim 1 characterised in that the spindle flange (12) has a projection (17) which is directed towards the spindle bearing (4) for fixing the bearing.

4. A headstock for a lathe according to claim 1 characterised in that the spindle flange (12) carries the sealing elements (19) of the bearing sealing means.

5. A headstock for a lathe according to claim 1 characterised in that the rotor (7) is directly fixed on the workpiece spindle (6).

6. A headstock for a lathe according to claim 1 characterised in that the rotor (7) is non-releasably fixed on the workpiece spindle (6).

7. A headstock for a lathe according to claim 1 characterised in that the rotor (7) is shrunk on the workpiece spindle (6).

8. A headstock for a lathe according to claim 1 characterised in that various spindle flanges (12) with different chuck centering projections (14) and/or different fixing bores for various chucks are interchangeable with each other.

9. A headstock for a lathe according to claim 1 characterised in that the inner races of the workpiece spindle bearings (4, 5) bear against inwardly disposed steps (18) of the workpiece spindle (6) or spacer rings (21) which are adjustably connected thereto.

10. A headstock for a lathe according to claim 1 characterised in that the spindle flange (12) has a fitting bore and the workpiece spindle (6) has a centering seat in the junction region.

## Revendications

1. Poupée fixe (1) destinée à un tour pourvu d'une broche porte-pièce (6), qui est montée tournante dans la poupée fixe (1) par l'intermédiaire d'un palier de broche (4, 5) antérieur et postérieur, et présente une bride de broche (12) destinée à la fixation d'un mandrin, le rotor (7) d'un moteur d'entraînement (11) étant fixé, sur la broche porte-pièce (6), entre le palier de broche (4, 5) antérieur et postérieur,
caractérisée en ce que la bride de broche (12) est reliée de façon détachable avec la broche porte-pièce (6), et en ce que les diamètres extérieurs de broche de la broche porte-pièce (6), des côtés des paliers de broche (4, 5) qui sont opposés au moteur d'entraînement (11), ne sont pas supérieurs aux diamètres intérieurs de palier respectifs.

2. Poupée fixe destinée à un tour selon la revendication 1, caractérisée en ce que la bride de broche (12) fixe l'anneau intérieur du palier de broche (4) sur la broche porte-pièce (6).

3. Poupée fixe destinée à un tour selon la revendication 1, caractérisée en ce que la bride de broche (12) possède une embase (17), orientée contre le palier de broche (4), pour la fixation du palier.

4. Poupée fixe destinée à un tour selon la revendication 1, caractérisée en ce que la bride de broche (12) porte les éléments d'étanchéité (19) du système d'étanchéité du palier.

5. Poupée fixe destinée à un tour selon la revendication 1, caractérisée en ce que le rotor (7) est fixé directement sur la broche porte-pièce (6).

6. Poupée fixe destinée à un tour selon la revendication 1, caractérisée en ce que le rotor (7) est fixé de façon imperdable sur la broche porte-pièce (6).

7. Poupée fixe destinée à un tour selon la revendication 1, caractérisée en ce que le rotor (7) est emmanché par frettage sur la broche porte-pièce.

8. Poupée fixe destinée à un tour selon la revendication 1, caractérisée en ce que différentes brides de broches (12) avec différentes embases de centrage de mandrins (14) et/ou différents perçages de fixation pour différents mandrins sont susceptibles d'être échangées les unes contre les autres.

9. Poupée fixe destinée à un tour selon la revendication 1, caractérisée en ce que les anneaux intérieurs des paliers de broche porte-pièce (4, 5) reposent contre des épaulements (18) intérieurs de la broche porte-pièce (6) ou contre des rondelles d'écartement (21) ajustables sur elle.

10. Poupée fixe destinée à un tour selon la revendication 1, caractérisée en ce que la bride de broche (12) présente un perçage ajusté et la broche porte-pièce (6) présente, dans la zone de jointure, une portée de centrage.
